# EUROPEAN PATENT APPLICATION

(11) **EP 4 549 407 A1**
(43) Date of publication of application: **07.05.2025**
(21) Application number: 22948446.4
(22) Date of filing: 29.06.2022
(51) Int. Cl.: C03B 33/03, B28D 5/00

(54) **PLATE CUT-OFF MACHINE CAPABLE OF SYNCHRONOUSLY CUTTING OFF AND DETECTING STRENGTH OF PLATE, AND CUT-OFF METHOD**

(71) Applicant: Super Energy Materials Inc., Taoyuan City, Taiwan 325019 (TW)
(72) Inventor: WEI, Ju-Chao, Taoyuan City, Taiwan 325019 (TW); CHEN, Tung-Lin, Taipei City, Taiwan 111006 (TW); LIAO, Chi-Kai, Taoyuan City, Taiwan 325018 (TW); CHIANG, Jun-Lun, Taiwan 310005 (TW); CHEN, Yi-Sheng, Taichung City, Taiwan 434023 (TW)
(74) Representative: Lang, Christian
(86) International application number: PCT/CN2022/102554
(87) International publication number: WO 2024/000332

(57) **Abstract**

A plate cut-off machine capable of simultaneously cutting off and detecting strength of plate, and cut-off method, includes a fixed platform, a lifting seat, stress sensors and a driving mechanism. Fixed platform is used to fix the plate with pre-formed rectangular cut line. The lifting seat is equipped with multiple cut-off blocks around it. The cut-off blocks are connected to the stress sensors. When the driving mechanism drives the lifting seat and the fixed platform to approach each other, the cut-off blocks apply vertical pressure to the edges of the plate along the cut line, so that the portion of the plate around the cut line is cut off and separated. At the same time, the stress on the plate when it cut is transmitted to the stress sensors, converted into electronic values and transmitted to a computer unit.

## Description

### BACKGROUND OF THE INVENTION

### 1. Field of the Invention:

The present invention relates to a cut-off machine mainly used for cutting plates such as ceramic substrates, and in particular to a plate cut-off machine and cutting method capable of simultaneously cutting and testing the strength of plates.

### 2. Description of the Related Art:

Ceramic substrate is a type of circuit board. It is made of refined high-purity inorganic materials. The composition and uniformity are precisely controlled by chemical or physical methods, and then formed by dry pressing, casting, or injection molding. After the sintering step, it is processed into a finished product. Unlike traditional FR-4 or aluminum substrates, ceramic substrate has a thermal expansion coefficient close to that of semiconductors and high heat resistance, as well as the characteristics of hardness, wear resistance, pressure resistance, high heat resistance, acid resistance, and alkali resistance, and is suitable for products with high heat generation (for example: high brightness LED substrates, LED car lights, LED street lights, solar inverters, etc.).

The substrate needs to be cut (truncated) into a suitable size before use. In particular, for brittle ceramic substrates, pre-treatment to form a cutoff line is required before cutting. Then, during subsequent processing, pressure is applied along the edge of the cut line to separate the plate along the cutoff line. The cutoff line can be formed by scribing with a scribing wheel (forming a scribing line), laser etching, etc.

In addition, in order to understand whether the strength of the substrate meets the requirements, it is currently necessary to perform a destructive test on the substrate. However, after the destructive test, the inspected plates become scrap and must be discarded, resulting in cost waste. Therefore, destructive testing can only be carried out by sampling and cannot achieve 100% testing. Also, since the strength testing machine is separate from the cut-off machine, it takes up more space.

### SUMMARY OF THE INVENTION

Based on the foregoing, the main purpose of the present invention is to provide a plate cut-off machine and cutting method capable of simultaneously cutting and testing the strength of plates.

The plate cut-off machine provided by the present invention can synchronously detect the strength of plate, comprising: a fixed platform for fixing a plate; a lifting seat arranged above the fixed platform and comprising a plurality of cut-off blocks arranged around a bottom thereof; a plurality of stress sensors connected to the cut-off blocks respectively and electrically connected to a computer unit; and a driving mechanism for driving the lifting seat or the fixed platform to rise or fall relative to each other in a vertical direction. The plate has an upper surface thereof pre-formed with a cut line. When the lifting seat or the fixed platform is driven to approach each other, the cut-off blocks apply vertical pressure to an edge of the cut line on the plate, so that a portion of the plate around the cut line is cut off and separated, and at the same time, the stress on the plate when the plate is cut is transmitted to the stress sensors, and is converted into electronic values and transmitted to the computer unit. Through this cut-off machine, the strength of the plate is tested immediately when it is cut, and the relevant data is transmitted to the computer unit for processing and analysis, so that defective products can be eliminated immediately, greatly improving production efficiency and saving the space occupied by testing equipment in the factory.

In another embodiment of the present invention, the fixed platform may be fixedly arranged, and the driving mechanism is used to drive the lifting seat to rise or fall relative to the fixed platform.

In another embodiment of the present invention, the lifting seat may be fixedly arranged, and the driving mechanism is used to drive the fixed platform to rise or fall relative to the lifting seat.

In one embodiment of the present invention, the lower ends of the cut-off blocks are at the same height. When the lifting seat or the fixed platform is driven close to each other, the cut-off blocks simultaneously apply vertical pressure to the edges of the cut line of the plate, so that the portion of the plate surrounding the cut line is cut off and separated.

In another embodiment of the present invention, the lower ends of the cut-off blocks can be placed at different heights. When the lifting seat or the fixed platform is driven close to each other, the cut-off blocks apply vertical pressure to the plate along the edges of the rectangular cut line in sequence from the lowest lower end to the highest lower end, so that the portion of the plate around the cut line is cut off and separated.

In a preferred embodiment of the present invention, a plurality of air holes are provided on the fixed platform, and the air holes are connected to a vacuum pump. When the vacuum pump is in operation, a negative pressure is formed in the air holes to adsorb the plate placed on the fixed platform. Through this structure, the plate can be quickly fixed on the fixed platform through vacuum adsorption force, or the plate can be quickly removed from the fixed platform when the vacuum is released.

In a preferred embodiment of the present invention, the lifting seat may comprise: a pressing platform having four slots arranged on four sides to form a rectangle and run vertically; and a connecting seat connected to one side of the pressing platform. The connecting seat is connected to the driving mechanism. The stress sensors are disposed above the pressing platform, and the cut-off blocks are disposed below the pressing platform. The stress sensors are connected to the cut-off blocks via connectors, respectively, and the connectors are accommodated in the slots, respectively. Therefore, the cut-off block below can transmit the relevant stress to the stress sensors above through the connecting seat while cutting off the plate, thus preventing the stress sensors from being damaged by external force.

In one embodiment of the present invention, a lower pressing plate may be disposed within a range surrounded by the cut-off blocks below the pressing platform, and a lower surface of the lower pressing plate may be located at a height position lower than a lowest lower end surface of the cut-off blocks. Therefore, before the cut-off blocks descend to contact the plate, the plate is first pressed by the lower pressing plate, and then the cut-off blocks contact the plate and cut it off.

The present invention also provides a plate cutting method capable of simultaneously cutting and testing the strength of plates, comprising the steps of: forming a cut line on an upper surface of a plate; and using the plate cut-off machine described above to apply a vertical downward pressure to edges of the plate along the cut line, so that the portion of the plate around the cut line is cut off and separated, and when the portion of the plate around the cut line is cut off and separated, transmitting the stress to which the plate is subjected when the plate to the stress sensors, and converting the stress into an electronic value and transmitting the electronic value to a computer unit.

According to another embodiment of the plate cutting method of the present invention, the plate cut-off machine can simultaneously apply vertical pressure to each edge of the plate, so that the portion of the plate around the cut line is cut off and separated. Alternatively, the plate cut-off machine may apply vertical downward pressure to the plate along each edge of the cut line in sequence, so that the portion of the plate around the cut line is cut off and separated.

### BRIEF DESCRIPTION OF THE DRAWINGS

FIG. 1 is a three-dimensional schematic diagram showing the appearance structure of the plate cut-off machine of the present invention.
FIG. 2 is a front view schematic diagram showing the appearance structure of the plate cut-off machine of the present invention.
FIG. 3 is a side view schematic diagram showing the appearance structure of the plate cut-off machine of the present invention.
FIG. 4 is a schematic top view showing the appearance of the structure of the plate cut-off machine of the present invention.
FIG. 5 is a three-dimensional schematic diagram showing the driving mechanism of the plate cut-off machine of the present invention.
FIG.6 is a three-dimensional exploded schematic diagram showing the lifting seat structure of the plate cut-off machine of the present invention.
FIG. 7 is a schematic diagram showing the overall structure of the plate cut-off machine of the present invention, and also showing a planar cross-sectional view of the plate being fixed but the lifting seat not yet descending to cut the plate.
FIG. 8 is a schematic cross-sectional view showing the lifting seat shown in FIG. 7 being lowered to cut off the plate.

### REFERENCE NUMERAL LIST

1: plate cut-off machine
10: base
11: fixed platform
12: driving mechanism
120: vertical plate
121: motor
1211: driving belt pulley
122: belt
123: screw rod
1231: driven belt pulley
1232: bearing seats
1233: moving block
13: rail
14: lifting seat
141: pressing platform
1411: first slot
1412: second slot
1413: third slot
1414: fourth slot
142: connecting seat
143: slider
15A: first connector
15B: second connector
15C: third connector
15D: fourth connector
16A: first stress sensor
16B: second stress sensor
16C: third stress sensor
16D: fourth stress sensor
17: fixing plate
18A: first cut-off block
18B: second cut-off block
18C: third cut-off block
18D: fourth cut-off block
19: lower pressing plate
2: plate
21: cut line

### DETAILED DESCRIPTION OF THE PREFERRED EMBODIMENT

The following is a more detailed description of the implementation of the present invention with reference to the accompanying drawings and component symbols, so that those skilled in the art can implement the invention accordingly after reading this specification.

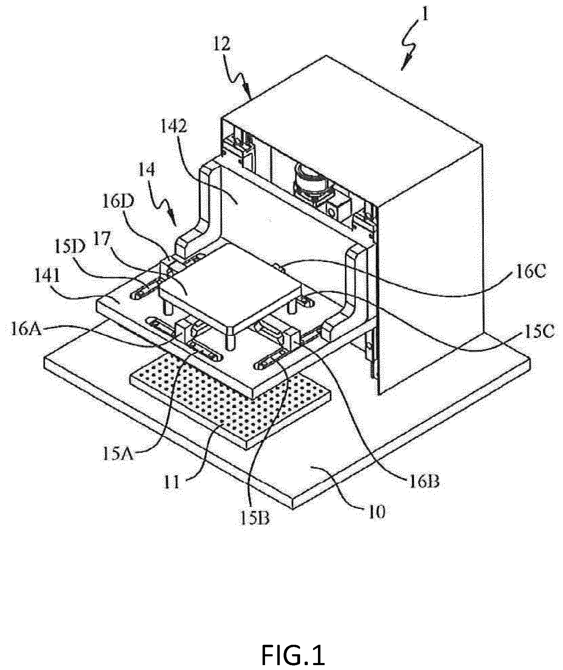

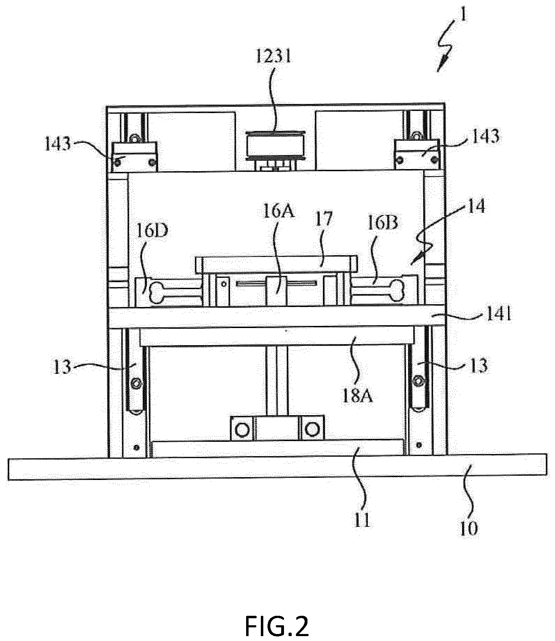

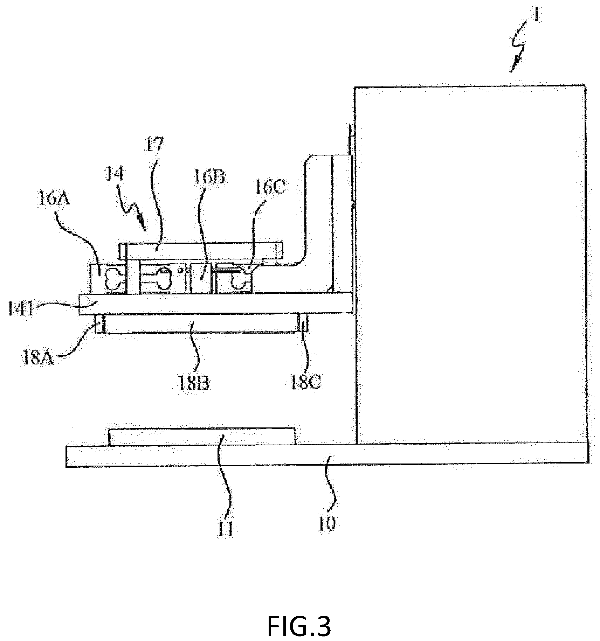

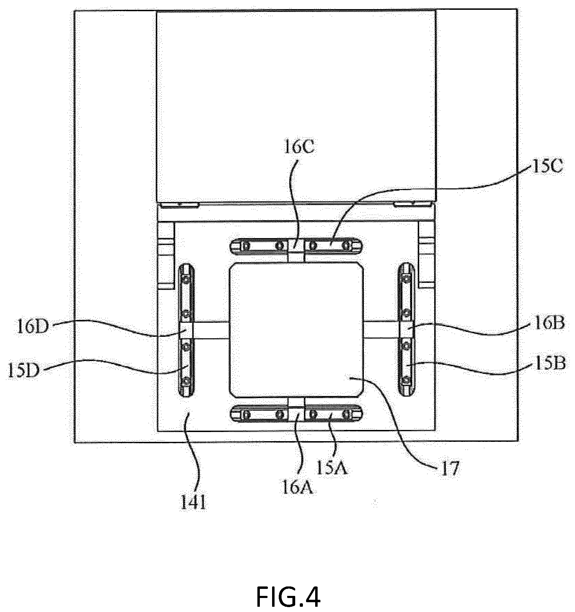

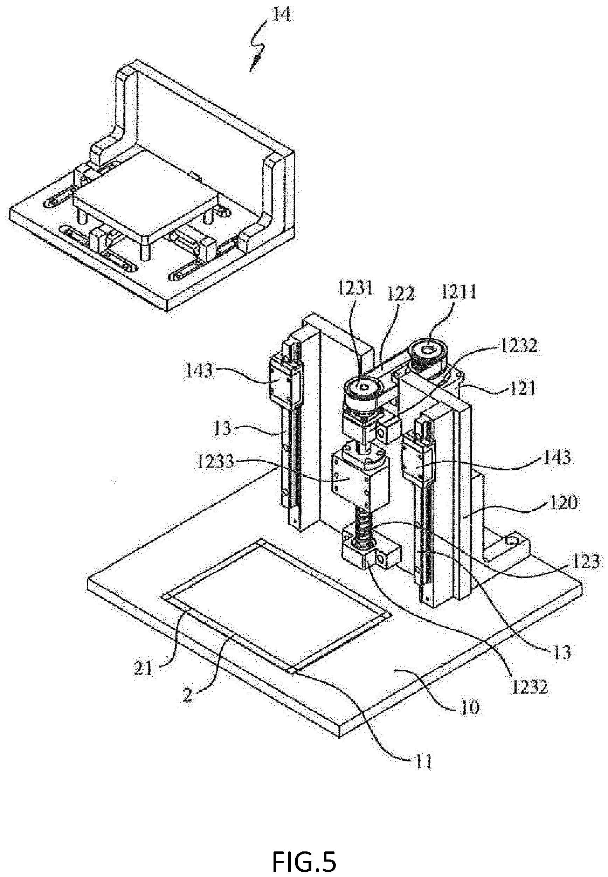

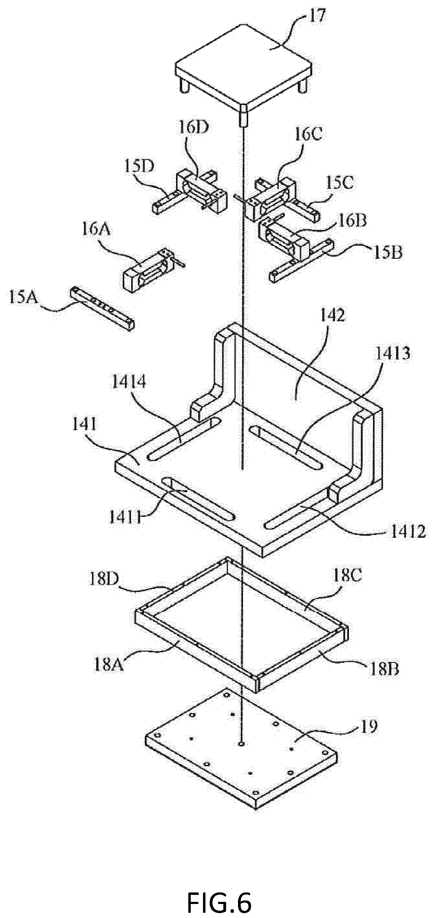

As shown in FIGS. 1 to 7, the present invention provides a plate cut-off machine capable of simultaneously cutting and testing the strength of plates cut-off machine **1.** In an embodiment, a fixed platform **11** and a driving mechanism **12** are provided on a base **10,** and a lifting seat **14** is connected to the driving mechanism **12.** The lifting seat **14** corresponds to the upper part of the fixed platform **11,** and the driving mechanism **12** is used to drive the lifting seat **14** to rise or fall in a vertical direction. The fixed platform 11 is provided with a plurality of air holes, which are connected to a vacuum pump (not shown in the figures). When the vacuum pump is running, the air in the air holes is sucked out to form a negative pressure, thereby forming a suction force above the fixed platform **11,** so that the fixed platform **11** is suitable for adsorbing and fixing the plate **2** on the fixed platform **11** (as shown in FIG. 5).

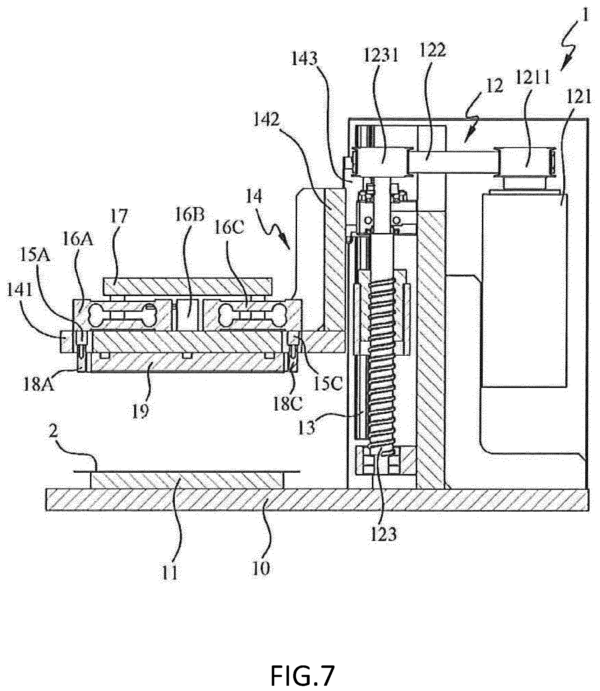

As shown in FIG. 5 and FIG. 7, the driving mechanism **12** is disposed on the base **10** and' a vertical plate **120** that is vertically fixed on the base **10.** The driving mechanism **12** comprises a motor **121** disposed on one side of the vertical plate **120,** and a screw rod **123** disposed on the other side of the vertical plate **120.** The two ends of the screw rod **123** are matched to bearing seats **1232** fixed at the upper and lower positions of the vertical plate **120** and are vertically arranged. A driven belt pulley **1231** is disposed at the upper end of the screw rod 123. The driven belt pulley **1231** is connected to a driving belt pulley **1211** disposed on the main shaft of the motor **121** by a belt **122** to form a linkage relationship. The screw rod **123** is also provided with a moving block **1233** in a spiral fit. Therefore, when the motor **121** rotates and drives the driving belt pulley **1211** to rotate, the driven belt pulley **1231** and the screw rod **123** are driven to rotate through the belt **122.** When the screw rod **123** rotates, the moving block **1233** is driven to move along the screw rod **123.** That is, when the screw rod **123** is driven to rotate forward or reverse, the moving block **1233** is driven to rise or fall. In addition, two rails **13** are symmetrically and vertically arranged on one side of the vertical plate **120** where the screw rod **123** is arranged, and each rail **13** is slidably matched with a slider **143.**

The lifting seat **14** is connected to the driving mechanism 12 and is disposed above the fixed platform **11.** The lifting seat 14 comprises a pressing platform **141** and a connecting seat **142.** The pressing platform **141** is configured horizontally, and the connecting seat **142** is fixedly disposed on one side of the pressing platform **141** and is substantially perpendicular to the pressing platform **141.** The pressing platform **141** is provided with four slots **1411** to **1414** arranged on four sides to form a rectangle and running vertically, namely, a first slot **1411,** a second slot **1412,** a third slot **1413** and a fourth slot **1414.** Four stress sensors **16A to 16D** are disposed above the pressing platform **141,** namely a first stress sensor **16A,** a second stress sensor **16B,** a third stress sensor **16C,** and a fourth stress sensor **16D.** Four cut-off blocks **18A** to **18D** are disposed below the pressing platform **141,** namely the first cut-off block **18A,** the second cut-off block **18B,** the third cut-off block **18C** and the fourth cut-off block **18D.** The stress sensors **16A-16D** are connected to the cut-off blocks **18A-18D** through the connection blocks **15A-15D** respectively. The stress sensors **16A-16D** are electrically connected to a computer unit (not shown in the figures).

More specifically, a first connector **15A** is accommodated in the first slot **1411,** the first stress sensor **16A** located above the pressing platform **141** is fixed to the top of the first connector **15A** by fixing elements such as screws, and the first cut-off block **18A** is fixed to the bottom of the first connector **15A** by fixing elements such as screws. The first cut-off block **18A** is fixed to the bottom of the first connector **15A** by means of fixing elements such as screws. Therefore, the first stress sensor **16A** and the first cut-off block **18A** are fixed on the upper and lower sides of the pressing platform **141** respectively. A second connector **15B** is accommodated in the second slot **1412,** the second stress sensor **16B** located above the pressing platform **141** is fixed to the upper side of the second connector **15B** by fixing elements such as screws, and the second cut-off block **18B** is fixed to the lower side of the second connector **15B** by fixing elements such as screws. Therefore, the second stress sensor **16B** and the second cut-off block **18B** are fixed on the upper and lower sides of the pressing platform **141** respectively. A third connector **15C** is accommodated in the third slot **1413,** the third stress sensor **16C** located above the pressing platform **141** is fixed to the upper side of the third connector **15C** by fixing elements such as screws, and the third cut-off block **18C** is fixed to the lower side of the third connector **15C** by fixing elements such as screws. This allows the third stress sensor **16C** and the third cut-off block **18C** to be fixed on the upper and lower sides of the pressing platform **141,** respectively. A fourth connector **15D** is accommodated in the fourth slot **1414,** the fourth stress sensor **16D** located above the pressing platform **141** is fixed to the upper side of the fourth connector **15D** by fixing elements such as screws, and the fourth cut-off block **18D** is fixed to the lower side of the fourth connector **15D** by fixing elements such as screws. Therefore, the fourth stress sensor **16D** and the fourth cut-off block **18D** are fixed on the upper and lower sides of the pressing platform **141** respectively. After the stress sensors **16A**-16D are placed on the pressing platform **141,** they are covered and fixed by the fixing plate **17** to protect the stress sensors **16A-16D.** Furthermore, preferably, a lower pressing plate **19** is provided within the range surrounded by the cut-off blocks **18A** to **18D** below the pressing platform **141,** and the lower surface of the lower pressing plate **19** is located at a position lower than the height position of the lowest lower end surface of the cut-off blocks **18A** to **18D.** That is, compared with the lower end surfaces of the cut-off blocks **18A** to **18D,** the lower end surface of the lower pressing plate **19** is the lowest.

The lifting seat **14** is connected to the driving mechanism **12** by the moving block **1233** that fixes the connecting seat **142** to the driving mechanism **12,** and two sliders 143. Therefore, when the screw rod **123** is driven to rotate forward or reverse to drive the moving block **1233** to rise or fall, the lifting seat **14** will be driven to rise or fall at the same time.

In the embodiment of the present invention, the lower ends of the four cut-off blocks **18A** to **18D** arranged in a rectangle are all at the same height. Alternatively, the lower ends of at least two of the four cut-off blocks **18A** to **18D** arranged in a rectangle are at the same height, but the lower ends of the remaining two cut-off blocks are at different heights from each other and from the lower ends of the two cut-off blocks mentioned above. Alternatively, the lower ends of two opposite cut-off blocks of the four cut-off blocks **18A** to **18D** arranged in a rectangle are at the same height, but the lower ends of the remaining two opposite cut-off blocks are at different heights from each other and are also at different heights from the lower ends of the aforementioned two cut-off blocks. For example, the lower ends of the first cut-off block **18A** and the third cut-off block **18C** are located at the same height position, and the lower ends of the second cut-off block **18B** and the fourth cut-off block **18D** are located at different height positions from each other and also different from the height positions of the lower ends of the first cut-off block **18A** and the third cut-off block **18C.** The height positions of the lower ends of the four cut-off blocks **18A** to **18D** can be achieved by making the cut-off blocks 18A to **18D** have the same or different thicknesses. Alternatively, the lower ends of the cut-off blocks **18A** to **18D** may be arranged at different heights. For example, the lower end of the first cut-off block **18A** is the lowest, the lower end of the second cut-off block **18B** is the second lowest, the lower end of the third cut-off block **18C** is the third lowest, and the lower end of the fourth cut-off block **18D** is the highest. The lower ends of the cut-off blocks **18A to 18D** are located at different heights from each other, which can be achieved by setting each of the cut-off blocks to have a different thickness.

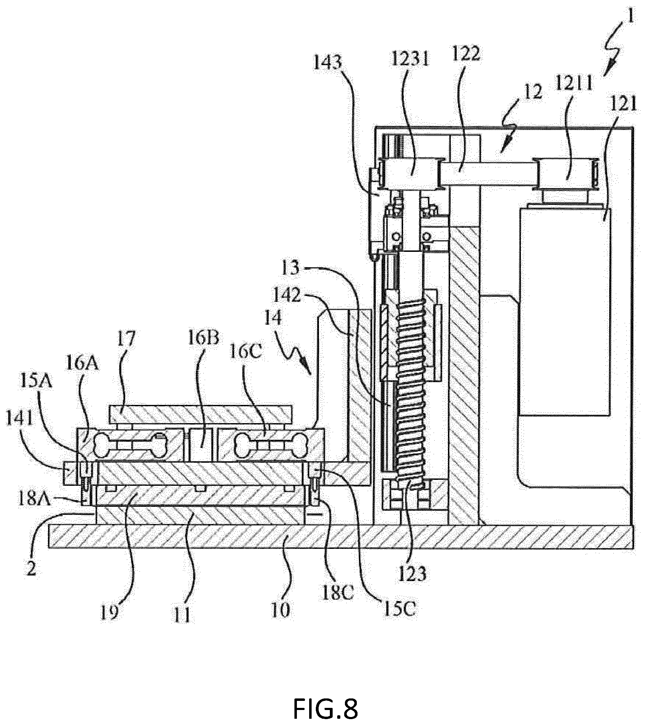

The plate cut-off machine 1 of the present invention is mainly used to cut brittle and hard plates 2 such as ceramic substrates. As shown in FIG. 5, FIG. 7 and FIG. 8, before the plate **2** is cut, the range to be broken needs to be marked on the plate surface. For a ceramic substrate, for example, a laser device can be used to laser the plate **2** to cut out a rectangular cut line **21** of appropriate depth. The cut line **21** is the reference line of the plate fracture, and can also be called the "fracture line" or "crack". Generally speaking, the inner dimensions of the rectangle enclosed by the cut line **21** correspond to the peripheral dimensions of the fixed platform **11.** The plate **2** with the rectangular cut line **21** cut by laser in advance is placed on the fixed platform **11,** and the vacuum pump is started to continuously extract the air in the air holes on the fixed platform **11,** so that the plate **2** is adsorbed and fixed on the fixed platform **11** by generating negative pressure in the air holes **11** (as shown in FIG. 7). Next, the motor **121** of the driving mechanism **12** is started, and the lifting seat **14** is lowered by the aforementioned driving method until the lower pressing plate **19** further presses and fixes the plate **2,** and then the cut-off blocks **18A to 18D** that continue to descend apply pressure along the edge of the cut line **21** on the plate **2** to cut and separate the plate **2** outside the cut line **21** (as shown in FIG. 8). Specifically, as mentioned above, when the lower ends of the cut-off blocks **18A-18D** are at the same height, the descending cut-off blocks **18A-18D** will simultaneously apply vertical pressure along the edges of the cut lines to cut off the plate. When the lower ends of the first cut-off block **18A** and the third cut-off block **18C** are at the same and lower height positions, but the lower ends of the second cut-off block **18B** and the fourth cut-off block **18D** are at different height positions and are higher than the lower ends of the first and third cut-off blocks **18A** and **18C,** The lifting seat **14** is lowered until the lower pressing plate **19** further presses and fixes the plate **2,** and then the first and third cut-off blocks **18A** and **18C** that continue to descend first apply pressure along the edges of the cut line **21** on the opposite sides of the plate **2,** then, the second and fourth cut-off blocks **18B** and **18D** which continue to descend apply pressure along the edges of the cut line **21** on the other opposite sides of the plate **2** to cut and separate the plate **2** outside the cut line **21.** Alternatively, when the lower ends of the first cut-off block **18A** to the fourth cut-off block **18D** are positioned in order from the lowest to the highest, the lifting seat **14** is lowered until the lower pressing plate **19** further presses and fixes the plate **2,** then, the first to fourth cut-off blocks **18A, 18B, 18C,** and **18D** are continuously descended to sequentially apply pressure along the edges of the cut line **21** on the plate **2** to cut and separate the plate **2** outside the cut line **21.** When the plate **2** is subjected to pressure, the stress on each side of the cut line **21** is transmitted to each stress sensor **16A-16D** through each cut-off block **18A-18D** and each connector **15A-15D.** When the plate **2** is cut off, each stress sensor **16A-16D** detects the maximum stress, and converts the obtained stress value into an electronic value and transmits it to the computer unit, so that each plate **2** is cut off and inspected at the same time without omission.

The cut line formed on the plate is not limited to a rectangle, and can be formed into a circle, a polygon or other geometric shapes according to the actual needs of the product. In this case, the configuration of the plurality of cut-off blocks must also be configured according to the shape of the cut line so that the cut-off blocks can apply vertical pressure to the edge of the cut line to cut it off.

Another embodiment of the present invention (not shown) can set the lifting seat to be fixed, and connect the driving mechanism to the fixed platform to drive the fixed platform to rise or fall. The same effect can be achieved by using the cut-off blocks to cut off the plate when the lifting seat and the fixed platform are close to each other.

The plate cutting method provided by the present invention can simultaneously detect the strength of the plate by using the aforementioned plate cut-off machine, comprising: forming a cut line on the upper surface of a plate; and applying vertical pressure to the plate along the edge of the cut line by the plate cut-off machine, so that the portion of the plate around the cut line is cut off and separated.

## Claims

1. A plate cut-off machine capable of simultaneously cutting off and detecting strength of plate, comprising:
a fixed platform (11) for fixing a plate (2);
a lifting seat (14) arranged above said fixed platform (11), said lifting seat (14) comprising a plurality of cut-off blocks (18A, 18B, 18C, 18D) arranged around a bottom thereof;
a plurality of stress sensors (16A, 16B, 16C, 16D) connected to said cut-off blocks (18A, 18B, 18C, 18D) respectively, said stress sensors (16A, 16B, 16C, 16D) being electrically connected to a computer unit; and
a driving mechanism (12) for driving one of said lifting seat (14) and said fixed platform (11) to rise or fall relative to each other in a vertical direction; and
wherein said plate (2) has an upper surface thereof pre-formed with a cut line (21); when one of said lifting seat (14) and said fixed platform (11) is driven to approach each other, said cut-off blocks (18A, 18B, 18C, 18D) apply vertical pressure to an edge of said cut line (21) on said plate (2), so that a portion of said plate (2) around said cut line (21) is cut off and separated, and at the same time, the stress on said plate (2) when said plate (2) is cut is transmitted to said stress sensors (16A, 16B, 16C, 16D), and is converted into electronic values and transmitted to said computer unit.

2. The plate cut-off machine capable of simultaneously cutting off and detecting strength of plate as claimed in claim 1, wherein said fixed platform (11) is fixedly arranged, and said driving mechanism (12) is used to drive said lifting seat (14) to rise or fall relative to said fixed platform (11).

3. The plate cut-off machine capable of simultaneously cutting off and detecting strength of plate as claimed in claim 1, wherein said lifting seat (14) is fixedly arranged, and said driving mechanism (12) is used to drive said fixed platform (11) to rise or fall relative to said lifting seat (14).

4. The plate cut-off machine capable of simultaneously cutting off and detecting strength of plate as claimed in claim 1, wherein said cut-off blocks (18A, 18B, 18C, 18D) have respective lower ends thereof arranged at the same height, so that when one of said lifting seat (14) and said fixed platform (11) is driven to approach each other, said cut-off blocks (18A, 18B, 18C, 18D) simultaneously apply vertical pressure to edges of said cut line (21) of said plate (2), so that the portion of said plate (2) surrounding said cut line (21) is cut off and separated.

5. The plate cut-off machine capable of simultaneously cutting off and detecting strength of plate as claimed in claim 1, wherein said cut-off blocks (18A, 18B, 18C, 18D) have respective lower ends thereof arranged at different heights, so that when one of said lifting seat (14) and said fixed platform (11) is driven to approach each other, said cut-off blocks (18A, 18B, 18C, 18D) apply vertical pressure to said plate (2) along each edge of said cut line (21) in sequence from the lowest one to the highest one, so that the portion of said plate (2) around said cut line (21) is cut off and separated.

6. The plate cut-off machine capable of simultaneously cutting off and detecting strength of plate as claimed in any one of claims 1-5, wherein said fixed platform (11) is provided with a plurality of air holes, and said air holes are connected to a vacuum pump, so that when said vacuum pump is in operation, a negative pressure is formed in said air holes to adsorb said plate (2) placed on said fixed platform (11).

7. The plate cut-off machine capable of simultaneously cutting off and detecting strength of plate as claimed in any one of claims 1-5, wherein said lifting seat (14) comprises
a pressing platform (141) provide with four slots (1411, 1412, 1413, 1414) arranged on four sides thereof to form a rectangle and run vertically; and
a connecting seat (142) is connected to one side of said pressing platform (141); and
wherein said stress sensors (16A, 16B, 16C, 16D) are arranged above said pressing platform (141), said cut-off blocks (18A, 18B, 18C, 18D) are arranged below said pressing platform (141), and said stress sensors (16A, 16B, 16C, 16D) are connected to said cut-off blocks (18A, 18B, 18C, 18D) respectively via a respective connector (15A, 15B, 15C, 15D), and said connectors (15A, 15B, 15C, 15D) are respectively accommodated in said slots (1411, 1412, 1413, 1414).

8. The plate cut-off machine capable of simultaneously cutting off and detecting strength of plate as claimed in claim 7, further comprising a lower pressing plate (19) provided within a range surrounded by said-off blocks (18A, 18B, 18C, 18D) below said pressing platform (141), said lower pressing plate (19) having a lower surface thereof located at a height position lower than the lowest lower end surface of said cut-off blocks (18A, 18B, 18C, 18D).

9. A plate cut-off machine capable of simultaneously cutting off and detecting strength of plate, comprising the steps of:
forming a cut line (21) on an upper surface of a plate (2); and
using the plate cut-off machine (1) according to any one of claims 1 to 8 to apply a vertical downward pressure to edges of said plate (2) along said cut line (21), so that the portion of said plate (2) around said cut line (21) is cut off and separated, and when the portion of said plate (2) around said cut line (21) is cut off and separated, transmitting the stress to which said plate (2) is subjected when said plate (2) to said stress sensors (16A, 16B, 16C, 16D), and converting the stress into an electronic value and transmitting the electronic value to a computer unit.

10. The plate cut-off machine capable of simultaneously cutting off and detecting strength of plate as claimed in claim 9, wherein said plate cut-off machine (1) simultaneously applies vertical pressure to each edge of said plate (2), so that the portion of said plate (2) around said cut line (21) is cut off and separated.

11. The plate cut-off machine capable of simultaneously cutting off and detecting strength of plate as claimed in claim 9, wherein said plate cut-off machine (1) applies vertical downward pressure to said plate (2) along each edge of said cut line (21) in sequence, so that the portion of said plate (2) around said cut line (21) is cut off and separated.
